# EUROPEAN PATENT SPECIFICATION

(11) **EP 1 755 938 B1**
(45) Date of publication and mention of the grant of the patent: **20.02.2008**
(21) Application number: 05741664.6
(22) Date of filing: 25.05.2005
(51) Int. Cl.: B62J 1/02

(54) **SUPPORTING FRAME PARTICULARLY FOR CYCLES, MOTORCYCLES AND PEDAL MACHINES SADDLES AND MANUFATURING METHOD**
STÜTZRAHMEN, INSBESONDERE FÜR SÄTTEL FÜR FAHRRÄDER, MOTORRÄDER UND PEDALBETÄTIGTE MASCHINEN SOWIE HERSTELLUNGSVERFAHREN
CADRE DE SUPPORT, EN PARTICULIER POUR SELLES DE BICYCLETTES, DE MOTOCYCLETTES ET AUTRES ENGINS A PEDALES, ET PROCEDE DE FABRICATION

(30) Priority: 25.05.2004 IT VI20040130
(43) Date of publication of application: 28.02.2007
(73) Proprietor: SELLE ROYAL S.P.A., 36100 Vicenza (IT)
(72) Inventor: SEGATO, Stefano, I-36100 Vicenza (IT)
(74) Representative: Vannini, Mario
(86) International application number: PCT/IB2005/001431
(87) International publication number: WO 2005/115823

(56) References cited:
- WO-A-03/082659
- US-A- 4 099 769
- US-A- 5 294 173

## Description

### Field of the Invention

This invention generally finds application in the field of accessories for bicycles and motorcycles and particularly relates to a support frame as defined in the preamble of claim 1, for use in saddles for bicycles, motorcycles and pedal-operated machines, as well as to a process for making same.

### Prior art

A number of support frames for bicycle saddles are known, which have one or two specially-shaped elongate members, generally made of metal or a composite material, which are known in the field as "rails". The elongate members generally have ends connected to the front and the rear portions of the saddle respectively, and an intermediate portion connected to the bicycle.

A disadvantage of such arrangements lies in their reduced ability to absorb the shock transmitted from the bicycle to the user. The elongate members are designed to exhibit a high fatigue strength and a high yield point and this involves a poorly damped elastic behavior thereof in response to a wide range of stresses.

US-A-6,343,836, US-A-5,507,476 and GB-A-2,050,259 disclose support frames having spring means in the proximity of the rear portion of the saddle, which are made of metal. These arrangements may generate undesired oscillations if the spring means have a relatively low stiffness, and have the same problems as the elongate members directly connected to the saddle, if the spring means have a relatively high stiffness. In either case, poor shock absorbing and damping properties result.

US-A-6,443,524 and US-A-5,911,473 disclose saddle support frames having shock absorber means interposed between the saddle and a substantially stiff portion of the frame to be attached to the bicycle. These shock absorber means are made of plastic, to obtain a damped elastic behavior therefrom. A disadvantage of this arrangement lies in that shock absorber means can only provide the required resistance and adequate shock absorbing properties if they have a large size. This may result in the shock absorber means being larger than the saddle, which may cause size problems and affect the aesthetic quality of the whole saddle and actual applicability thereof.

Furthermore, the basic plastic material of shock absorber means has a relatively low stiffness which may cause excessive saddle oscillation amplitudes in case of shocks, and force the user to take improper positions.

US-A-5,692,801 and WO-A-9,525,662 respectively disclose saddle support frames having elastic means and shock absorber means, both interposed between the saddle and a substantially stiff portion of the frame to be attached to the bicycle. Thus, the elastic means and the shock absorber means operate in parallel to absorb the transmitted shocks and simultaneously limit the oscillation amplitudes of the user.

A disadvantage of this arrangement lies in the high complexity thereof, which increases costs and affects reliability with time. Furthermore, since the shock absorber means are located in restricted areas, they shall have a sufficient size to ensure an adequate shock absorbing action, and risk to be excessively bulky and cumbersome.

FR-A-2,768,987, US-A-6,364,292 and US-A-5,443,301 disclose shock absorbing arrangements for bicycles, interposed between the saddle and the bicycle frame. These arrangement have the apparent disadvantage of complicating the construction of the bicycle and increasing costs therefor. Also, the provision of shock absorbers at the connection between the bicycle frame and the saddle may hinder or hamper assembly and height adjustment operations. Furthermore, these shock absorbers may cause the saddle to move with respect to the bicycle frame, and force to user to take uncomfortable positions, or repeatedly change his/her posture as he/she pedals.

US-A-5294173 discloses a bicycle saddle support frame according to the preamble of claim 1.

### Disclosure of the invention

A primary object of this invention is to obviate the above drawbacks, while providing a cost-effective support frame.

A particular object is to provide a support frame which has high vibration damping properties, while preventing any undesired oscillation of the saddle and the user.

A further object of the invention is to provide a frame that may be easily configured for different types of bicycles, motorcycles, and pedal-operated machines, and may be sized to obtain different shock absorbing properties.

Another particular object is to provide a sturdy and reliable frame, whose features remain unchanged with time.

A further object of the invention is to provide a frame which has a relatively low weight and relatively small overall size.

These objects, as well as other that will be apparent hereinafter, are achieved, according to claim 1, by providing a support frame, particularly for use in a saddle for bicycles, motorcycles and pedal-operated machines, wherein the saddle includes a main body having a tapered front portion and a widened rear portion for supporting the ischial bones of a user, wherein the frame has at least one specially shaped bar having a first end portion securable to the front portion of the main body, a second end portion attachable to the rear portion of the main body and an intermediate portion connectable to the frame of the machine, wherein the shaped bar comprises at least one outer tubular element, having internally thereof at least one core element, **characterized in that** at least one intermediate layer made of a viscoelastic material being interposed between the tubular element and the core element, to damp bar vibrations.

By this particular arrangement, a frame may be obtained having high vibration damping and shock absorbing properties as well as an adequate stiffness to allow proper user posture.

### Brief Description of the Drawings

Further characteristics and advantages of the invention will be more apparent from the detailed description of several preferred, non-exclusive embodiments of a support frame according to the invention, which are described by way of non-limiting examples with reference to the annexed drawings, in which:

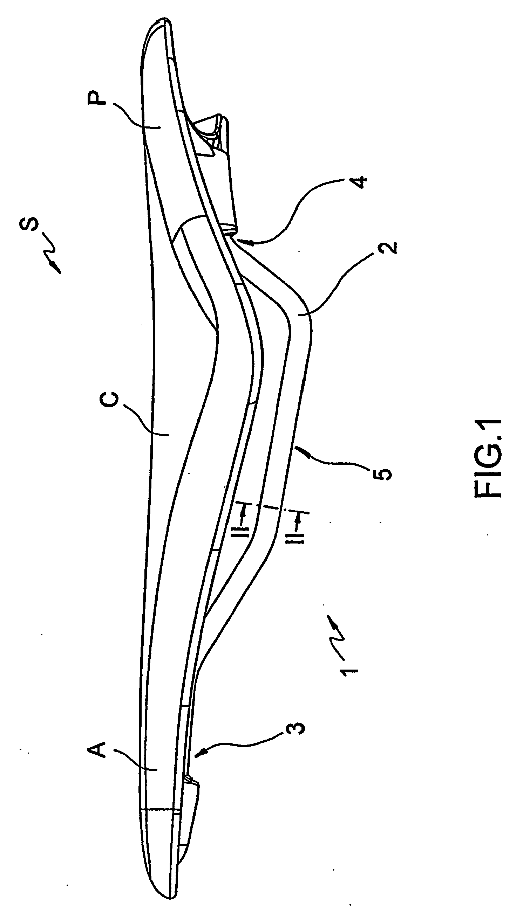

FIG. 1 is a side view of a support frame according to the invention, when mounted on a saddle;
FIG. 2 is a sectional side view of the support frame of FIG. 1;
FIG. 3 is a sectional view of the frame of FIG. 2 in an intermediate step of a process according to the invention.

### Detailed description of a preferred embodiment

Particularly referring to the above figures, a support frame according to the invention is described, which is generally denoted by numeral 1, particularly for use in a saddle S for bicycles, motorcycles and pedal-operated machines.

Saddle S to be supported by the frame 1 includes a main body C having a front portion A that is tapered to assist bicycle or motorcycle riding and a widened rear portion P for supporting the ischial bones of the user.

Frame 1 has at least one shaped bar 2 having a first end portion 3 adapted to be connected to the front portion A of the main body C, a second end portion 4 adapted to be connected to the rear portion P of the main body C and an intermediate portion 5 adapted to be connected to the frame of the machine (not shown in the attached drawings).

A peculiar feature of the invention consists in that the shaped bar 2 has at least one outer tubular element 6 and at least one core element 7 placed internal of the outer tubular element 6. More in detail, in several preferred embodiments, the core element 7 may be substantially coaxial to the tubular element 6. Furthermore, at least one intermediate layer 8 made of a viscoelastic material is interposed between the tubular element 6 and the core element 7. Thus, the vibrations transmitted by the pedal-operated machine cause both the tubular element 6 and the core element 7 to vibrate, but their motion is damped by the intermediate viscoelastic layer 8.

Advantages were particularly found to result from using a viscoelastic gel material, preferably a polyurethane material.

In addition to the shock absorbing action of the viscoelastic material, the amplitude of the vibrations transmitted to the user may be further decreased by differentiating the vibrations transmitted to the tubular element 6 and the core element 7. Particularly, a suitable phase shift, preferably of 180°, between the vibrations of the two elements 6, 7 is found to be considerably effective for shock absorption purposes. Such 180° or similar phase shift causes the stresses transmitted to the user by the vibrating tubular element 6 to substantially neutralize the stresses deriving from the vibration of the core element 7.

The above phase-shift may be obtained by appropriately selecting materials and/or sizes of the tubular element 6 and the core element 7.

Particularly, the base materials of the outer tubular element 6 and the core element 7 may have differentiated densities, so as to generate the above mentioned phase shift. More in detail, the base material of the core element 7 may be brass, and the base material of the tubular element 6 may be steel.

By suitably selecting the diameters of the tubular element 6 and the core element 7, the vibratory behavior of the two elements 6, 7 may be influenced. First of all, to allow the vibration of the core element 7, the outside diameter D"_{E} of the latter may be arranged to be smaller than the inside diameter D'_{I} of the tubular element 6. Furthermore, to improve the above phase shift, the core element 7 may have an outside diameter D"_{E} of 3 to 5 mm, and the tubular element 6 may have an outside diameter D'_{E} of 6 to 8 mm, and a thickness T of 1 .to 1.5 mm.

In certain preferred embodiments, the core element 7, the tubular element 6 and the intermediate layer 8 may extend substantially along the same length, which may be substantially equal to the longitudinal length of the shaped bar 2.

In other preferred embodiments, not shown in the accompanying drawings, the core element 7, the tubular element 6 and the intermediate layer 8 may have different lengths. Particularly, the shaped bar 2 may comprise a plurality of tubular elements 6 externally connected to one core element (7). Thus, the tubular elements 6 may be only placed where they are actually useful for vibration damping purposes. Alternatively, the shaped bar 2 may comprise a plurality of core elements 7 internally connected to one tubular element 6. In this case, the core elements 7 may be suitably spaced inside the tubular element 6 along the shaped bar 2 to maximize the vibration damping effect.

The support frame 1 as described hereinbefore may be fabricated through a process including the following steps.

In a first step a), a tubular element 6 is provided, and in a second step b) at least one elongate core element is provided. Multiple tubular elements 6 or multiple core elements 7 may be also advantageously provided.

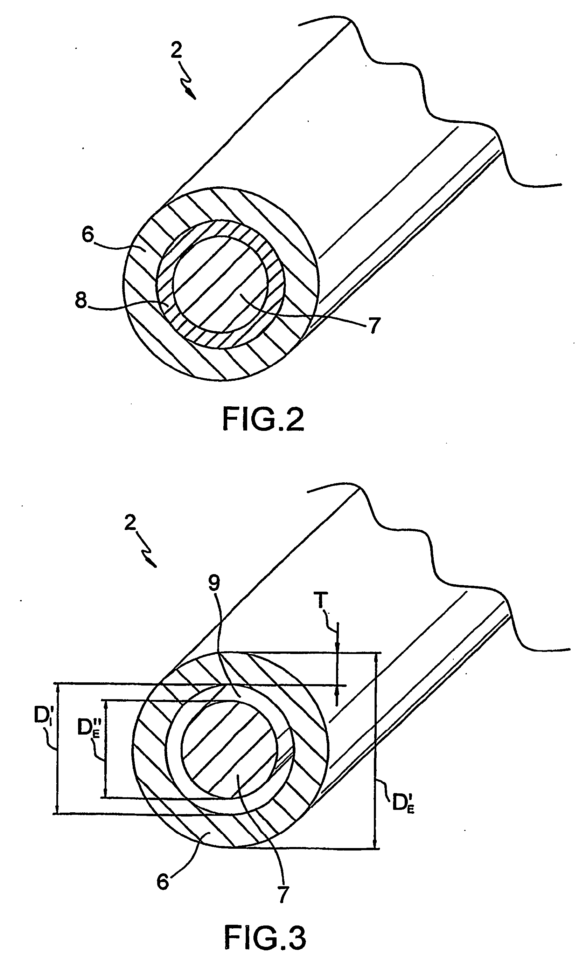

In a third step c), the core element 7 is introduced in the tubular element 6 in such a manner as to form a bar 2 with an air space 9 therein, as shown in FIG. 3.

If multiple core elements 7 are provided, these will be introduced one after the other in the corresponding tubular element 6. Similarly, if multiple tubular elements 6 are provided, these will be fitted one after the other on the corresponding core element 7.

In a fourth step d), a bar 2 is shaped to be later finished in the subsequent steps, in such a manner as to form a first end portion 3 adapted to be connected to the front portion A of the main body C, a second end portion 4 adapted to be connected to the rear portion P of the main body C and an intermediate portion 5 adapted to be connected to the frame of the machine.

After such shaping step, the bar 2 may undergo one or more heat treatments to provide each tubular element 6 and each core element 7 with the desired mechanical properties, in terms of hardness, and static, fatigue and impact strength. Furthermore, the shaped bar 2 may be suitably surface-treated to obtain an optimal finish thereof.

In a fifth step e), a viscoelastic material is introduced in the air space 9 to form an intermediate layer 8 adapted to damp the vibrations of the bar 2 during operation thereof. Also, the introduction of viscoelastic material may be followed by crosslinking thereof.

More in detail, the step e) of introduction of the intermediate layer 8 may be performed either before or after the shaping step d). The decision as to whether to introduce the viscoelastic material before or after the shaping step depends on the physical properties of the viscoelastic material and, particularly, on its ability to keep its own mechanical properties unchanged when the shaped bar 2 is subjected to heat treatments. Hence, if the viscoelastic material has a low or poor resistance to thermal cycles, it may be advantageously introduced after shaping. However, if the viscoelastic material is unaffected by thermal cycles or if no thermal cycle is provided, the step e) of introduction of the viscoelastic material may be performed before the shaping step d).

The above disclosure clearly shows that the inventive support frame and process fulfill the proposed objects and particularly provide effective damping of the vibrations transmitted to the user, while allowing the user to take and keep an anatomically correct posture.

The support frame and process according to this invention are susceptible to a number of modifications and variants, all falling within the scope of the appended claims. All the details thereof may be replaced by other technically equivalent parts, and the materials may vary depending on different needs, without departure from the scope of the invention.

While the support frame has been described with particular reference to the accompanying figures, the numerals referred to in the disclosure and claims are only used for the sake of a better intelligibility of the invention and shall not be intended to limit the claimed scope in any manner.

## Claims

1. A support frame, particularly for use in a saddle (S) for bicycles, motorcycles and pedal-operated machines, wherein the saddle (S) includes a main body (C) having a tapered front portion (A) and a widened rear portion (P) for supporting the ischial bones of a user, wherein the frame (1) has at least one specially shaped bar (2) having a first end portion (3) securable to the front portion (A) of the main body (C), a second end portion (4) securable to the rear portion (P) of the main body (C) and an intermediate portion (5) adapted to be connected to the frame of the machine, wherein the shaped bar (2) comprises at least one outer tubular element (6), having internally thereof at least one core element (7), **characterized in that** at least one intermediate layer (8) made of a viscoelastic material being interposed between said at least one tubular element (6) and said at least one core element (7), to damp the vibrations of said bar (2).

2. A frame as claimed in claim 1, **characterized in that** said core element (7) is substantially coaxial to said tubular element (6).

3. A frame as claimed in claim 2, **characterized in that** said viscoelastic material is a gel material.

4. A frame as claimed in claim 3, **characterized in that** said gel material is a polyurethane material.

5. A frame as claimed in claim 1, **characterized in that** the base materials of said outer tubular element (6) and said core element (7) have differentiated densities, selected to generate differentiated vibrations in these respective elements.

6. A frame as claimed in claim 5, **characterized in that** the base material of said core element (7) is brass, and the base material of said tubular element (6) is steel.

7. A frame as claimed in claim 1, **characterized in that** said core element (7) has an outside diameter (D"_{E}) that is smaller than the inside diameter (D'_{I}) of said tubular element (6).

8. A frame as claimed in claim 7, **characterized in that** said core element (7) has an outside diameter (D"_{E}) of 3 to 5 mm, and said tubular element (6) has an outside diameter (D'_{E}) of 6 to 8 mm, and a thickness (T) of 1 to 1.5 mm.

9. A frame as claimed in claim 1, **characterized in that** said core element (7), said tubular element (6) and said intermediate layer (8) extend substantially along the same length.

10. A frame as claimed in claim 9, **characterized in that** the length of said core element (7), of said tubular element (6) and of said intermediate layer (8) is substantially equal to the longitudinal length of said shaped bar (2).

11. A frame as claimed in claim 1, **characterized in that** said core element (7), said tubular element (6) and said intermediate layer (8) have different lengths.

12. A frame as claimed in claim 11, **characterized in that** said shaped bar (2) comprises a plurality of said tubular elements (6) externally connected to one core element (7).

13. A frame as claimed in claim 11, **characterized in that** said shaped bar (2) comprises a plurality of said core elements (7) internally connected to one tubular element (6).

14. A process for making a support frame as claimed in one or more of the preceding claims, particularly for use in a saddle (S) for bicycles, motorcycles and pedal-operated machines, wherein the saddle (S) includes a main body (C) having a tapered front portion (A) and a widened rear portion (P) for supporting the ischial bones of a user, wherein the process includes the steps of:
a) providing at least one tubular element (6);
b) providing at least one elongate core element (7);
c) introducing said at least one core element (7) in said at least one tubular element (6) in such a manner as to form a bar (2) with an air space therein (9) :
d) shaping said bar (2) to define thereon a first end portion (3) adapted to be connected to the front portion (A) of the main body (C), a second end portion (4) adapted to be connected to the rear portion (P) of the main body (C) and an intermediate portion (5) adapted to be connected to the frame of the machine;
e) introduction of a viscoelastic material in said air space (9) to form an intermediate layer (8) between said at least one tubular element (6) and said at least one core element (7), and damp the vibrations of said bar (2).

15. A process as claimed in claim 14, **characterized in that** said step e) of introduction of the viscoelastic material is performed before said shaping step d).

16. A process as claimed in claim 14, **characterized in that** said step e) of introduction of the viscoelastic material is performed after said shaping step d).

17. A process as claimed in claim 14, **characterized in that** it includes finishing of said shaped bar (2).

18. A process as claimed in claim 14, **characterized in that** it includes one or more heat treatments on said shaped bar (2).

19. A process as claimed in claim 14, **characterized in that** said step e) of introduction of the viscoelastic material is followed by crosslinking thereof.

## Patentansprüche

1. Tragrahmen, insbesondere für die Verwendung in einem Sattel (S) für Fahrräder, Motorräder und pedalbetriebene Maschinen, wobei der Sattel (S) einen Hauptkörper (C) umfasst mit einem spitz zulaufenden vorderen Bereich (A) und einem erweiterten hinteren Bereich (P) zur Abstützung der ischialen Knochen eines Nutzers, wobei der Rahmen (1) mindestens einen speziell geformten Riegel (2) aufweist mit einem ersten Endbereich (3), der an dem vorderen Bereich (A) des Hauptkörpers (C) zu befestigen ist, einem zweiten Endbereich (4), der an dem hinteren Bereich (P) des Hauptkörpers (C) zu befestigen ist und einem Zwischenbereich (5), der ausgebildet ist, um mit dem Rahmen der Maschine verbunden zu sein, wobei der geformte Riegel (2) mindestens ein äußeres rohrförmiges Element (6) umfasst, das in seinem Inneren mindestens ein Kernelement (7) aufweist, **dadurch gekennzeichnet, dass** mindestens eine Zwischenschicht (8) aus einem viskoelastischen Material zwischen das mindestens eine rohrförmige Element (6) und das mindestens eine Kernelement (7) eingefügt ist, um die Vibrationen dieses Riegels (2) zu dämpfen.

2. Tragrahmen gemäß Anspruch 1, **dadurch gekennzeichnet, dass** das mindestens eine Kernelement (7) im wesentlichen koaxial ist zu dem rohrförmigen Element (6).

3. Tragrahmen gemäß Anspruch 2, **dadurch gekennzeichnet, dass** das viskoelastische Material ein Gelmaterial ist.

4. Tragrahmen gemäß Anspruch 3, **dadurch gekennzeichnet, dass** das Gelmaterial ein Polyurethanmaterial ist.

5. Tragrahmen gemäß Anspruch 1, **dadurch gekennzeichnet, dass** die Grundmaterialien des äußeren rohrförmigen Elements (6) und des Kernelements (7) differenzierte Dichten aufweisen, die ausgewählt sind, um differenzierte Vibrationen in diesen jeweiligen Elementen zu erzeugen.

6. Tragrahmen gemäß Anspruch 5, **dadurch gekennzeichnet, dass** das Grundmaterial des Kernelements (7) Messing ist und das Grundmaterial des rohrförmigen Elements (6) Stahl ist.

7. Tragrahmen gemäß Anspruch 1, **dadurch gekennzeichnet, dass** das Kernelement (7) einen äußeren Durchmesser (D' ' _{E}) hat, der kleiner ist als der innere Durchmesser (D'_{I}) des rohrförmigen Elements (6).

8. Tragrahmen gemäß Anspruch 7, **dadurch gekennzeichnet, dass** das Kernelement (7) einen äußeren Durchmesser (D"_{E}) von 3 bis 5 mm hat und das rohrförmige Element (6) einen äußeren Durchmesser (D'_{E}) von 6 bis 8 mm und eine Dicke (T) von 1 bis 1,5 mm hat.

9. Tragrahmen gemäß Anspruch 1, **dadurch gekennzeichnet, dass** das Kernelement (7), das rohrförmige Element (6) und die Zwischenschicht (8) sich im wesentlichen entlang der selben Länge erstrecken.

10. Tragrahmen gemäß Anspruch 9, **dadurch gekennzeichnet, dass** die Länge des Kernelements (7), des rohrförmigen Elements (6) und der Zwischenschicht (8) im wesentlichen gleich ist zu der longitudinalen Länge des geformten Riegels (2).

11. Tragrahmen gemäß Anspruch 1, **dadurch gekennzeichnet, dass** das Kernelement (7), das rohrförmige Element (6) und die Zwischenschicht (8) unterschiedliche Längen haben.

12. Tragrahmen gemäß Anspruch 11, **dadurch gekennzeichnet, dass** der geformte Riegel (2) eine Vielzahl von diesen rohrförmigen Elementen (6) umfasst, die nach außen mit einem Kernelement (7) verbunden sind.

13. Tragrahmen gemäß Anspruch 11, **dadurch gekennzeichnet, dass** der geformte Riegel (2) eine Vielzahl der Kernelemente (7) umfasst, die nach innen mit einem rohrförmigen Element (6) verbunden sind.

14. Verfahren zur Herstellung eines Tragrahmens gemäß einem der vorhergehenden Ansprüche, insbesondere für die Verwendung in einem Sattel (S) für Fahrräder, Motorräder und pedalbetriebene Maschinen, wobei der Sattel (S) einen Hauptkörper (C) umfasst mit einem spitz zulaufenden vorderen Bereich (A) und einem erweiterten hinteren Bereich (P) zur Abstützung der ischialen Knochen eines Nutzers, wobei das Verfahren die Schritte umfasst:
a) Vorsehen mindestens eines rohrförmigen Elements (6),
b) Vorsehen mindestens eines länglichen Kernelements (7),
c) Einführen des mindestens einen Kernelements (7) in das mindestens eine rohrförmige Element (6) auf eine solche Weise, dass ein Riegel (2) mit einem Luftraum darin (9) gebildet wird,
d) Formen des Riegels (2), um darauf einen ersten Endbereich (3) zu bestimmen, der ausgebildet ist, um mit dem vorderen Bereich (A) des Hauptkörpers (C) verbunden zu sein, einem zweiten Endbereich (4), der ausgebildet ist, um mit dem hinteren Bereich (P) des Hauptkörpers (C) verbunden zu sein und einem Zwischenbereich (5), der ausgebildet ist, um mit dem Rahmen der Maschine verbunden zu sein,
e) Einführen eines viskoelastischen Materials in den Luftraum (9), um eine Zwischenschicht (8) zu bilden zwischen dem mindestens einen rohrförmigen Element (6) und dem mindestens einen Kernelement (7) und Dämpfen der Vibrationen dieses Riegels (2).

15. Verfahren gemäß Anspruch 14, **dadurch gekennzeichnet, dass** der Schritt e) des Einführens des viskoelastischen Materials vor dem Schritt d) des Formens erfolgt.

16. Verfahren gemäß Anspruch 14, **dadurch gekennzeichnet, dass** der Schritt e) des Einführens des viskoelastischen Materials nach dem Schritt d) des Formens erfolgt.

17. Verfahren gemäß Anspruch 14, **dadurch gekennzeichnet, dass** die Bearbeitung des geformten Riegels (2) umfasst ist.

18. Verfahren gemäß Anspruch 14, **dadurch gekennzeichnet, dass** eine oder mehrere Bearbeitungen mit Wärme des geformten Riegels (2) umfasst ist.

19. Verfahren gemäß Anspruch 14, **dadurch gekennzeichnet, dass** der Schritt e) des Einführens des viskoelastischen Materials gefolgt ist von dessen Vernetzung.

## Revendications

1. Armature de support, particulièrement destinée à être utilisée dans une selle (S) pour bicyclettes, motocyclettes et engins actionnés au moyen de pédales, où la selle (S) comprend un corps principal (C) ayant une partie avant (A) à section décroissante et une partie arrière élargie (P) destinée à supporter les os du bassin d'un utilisateur, dans laquelle l'armature (1) a au moins une barre (2) spécialement mise en forme qui possède une première partie extrême (3) pouvant être fixée à la partie avant (A) du corps principal (C), une seconde partie extrême (4) pouvant être fixée à la partie arrière (P) du corps principal (C) et une partie intermédiaire (5) adaptée pour être assemblée au cadre de l'engin, où la barre mise en forme (2) comprend au moins un élément tubulaire extérieur (6) ayant intérieurement au moins un élément d'âme (7), **caractérisée en ce qu'**au moins une couche intermédiaire (8) faite d'une matière viscoélastique est interposée entre ledit au moins un élément tubulaire (6) et ledit au moins un élément d'âme (7), pour amortir les vibrations de ladite barre (2).

2. Armature selon la revendication 1, **caractérisée en ce que** ledit élément d'âme (7) est sensiblement coaxial audit élément tubulaire (6).

3. Armature selon la revendication 2, **caractérisée en ce que** ladite matière viscoélastique est une matière à l'état de gel.

4. Armature selon la revendication 3, **caractérisée en ce que** ladite matière à l'état de gel est une matière de polyuréthane.

5. Armature selon la revendication 1, **caractérisée en ce que** les matières de base dudit élément tubulaire extérieur (6) et dudit élément d'âme (7) ont des densités différentes, choisies pour générer des vibrations différenciées dans ces éléments respectifs.

6. Armature selon la revendication 5, **caractérisée en ce que** la matière de base dudit élément d'âme (7) est du laiton et la matière de base dudit élément tubulaire (6) est de l'acier.

7. Armature selon la revendication 1, **caractérisée en ce que** l'élément d'âme (7) a un diamètre extérieur (D"E) qui est plus petit que le diamètre intérieur (D'I) dudit élément tubulaire (6).

8. Armature selon la revendication 7, **caractérisée en ce que** ledit élément d'âme (7) a un diamètre extérieur (D"E) de 3 à 5 mm et ledit élément tubulaire (6) a un diamètre extérieur (D'E) de 6 à 8 mm et une épaisseur (T) de 1 à 1,5 mm.

9. Armature selon la revendication 1, **caractérisée en ce que** ledit élément d'âme (7), ledit élément tubulaire (6) et ladite couche intermédiaire (8) s'étendent sensiblement sur la même longueur.

10. Armature selon la revendication 9, **caractérisée en ce que** la longueur dudit élément d'âme (7), celle dudit élément tubulaire (6) et celle de ladite couche intermédiaire (8) sont sensiblement égales à la longueur longitudinale de ladite barre mise en forme (2).

11. Armature selon la revendication 1, **caractérisée en ce que** l'élément d'âme (7), ledit élément tubulaire (6) et ladite couche intermédiaire (8) ont des longueurs différentes.

12. Armature selon la revendication 11, **caractérisée en ce que** ladite barre mise en forme (2) comprend une pluralité desdits éléments tubulaires (8) assemblés extérieurement à un élément d'âme (7).

13. Armature selon la revendication 11, **caractérisée en ce que** ladite barre mise en forme (2) comprend une pluralité desdits éléments d'âme (7) assemblés intérieurement à un élément tubulaire (6).

14. Procédé pour fabriquer une armature de support selon une ou plusieurs des revendications précédentes, destinée en particulier à être utilisée dans une selle (S) pour bicyclettes, motocyclettes et engins actionnés au moyen de pédales, où la selle (S) comprend un corps principal (C) ayant une partie avant (A) à section décroissante et une partie arrière élargie (P) destinée à supporter les os du bassin d'un utilisateur, où le procédé comprend les étapes consistant à :
a) fournir au moins un élément tubulaire (6) ;
b) fournir au moins un élément d'âme allongé (7) ;
c) introduire ledit au moins un élément d'âme (7) dans ledit au moins un élément tubulaire (6) de manière à former une barre (2) ayant intérieurement un espace d'air (9) ;
d) mettre ladite barre (2) en forme pour définir sur cette barre une première partie extrême (3) adaptée pour être assemblée à la partie avant (A) du corps principal (C), une seconde partie extrême (4) adaptée pour être assemblée à la partie arrière (P) dudit corps principal (C) et une partie intermédiaire (5) adaptée pour être assemblée au cadre de l'engin ;
e) introduction d'une matière viscoélastique dans ledit espace d'air (9) pour former une couche intermédiaire (8) entre ledit au moins un élément tubulaire (6) et ledit au moins un élément d'âme (7) et pour amortir les vibrations de ladite barre (2).

15. Procédé selon la revendication 14, **caractérisé en ce que** ladite étape e) d'introduction de la matière viscoélastique est exécutée avant ladite étape de mise en forme d).

16. Procédé selon la revendication 14, **caractérisé en ce que** ladite étape e) d'introduction de la matière viscoélastique est exécutée après ladite étape de mise en forme d).

17. Procédé selon la revendication 14, **caractérisé en ce qu'**il comprend une finition de ladite barre mise en forme (2).

18. Procédé selon la revendication 14, **caractérisé en ce qu'**il comprend un ou plusieurs traitements thermiques effectués sur ladite barre mise en forme (2).

19. Procédé selon la revendication 14, **caractérisé en ce que** ladite étape e) d'introduction de la matière viscoélastique est suivie d'une réticulation de cette matière.
